# EUROPÄISCHE PATENTSCHRIFT

(11) **EP 2 435 310 B1**
(45) Veröffentlichungstag und Bekanntmachung des Hinweises auf die Patenterteilung: **25.06.2014**
(21) Anmeldenummer: 10718082.0
(22) Anmeldetag: 29.04.2010
(51) Int. Cl.: B64F 5/00, B62B 3/10

(54) **TRANSPORTVORRICHTUNG ZUR VERWENDUNG BEI DER MONTAGE VON INTERIEURKOMPONENTENMODULEN IN EINEM FLUGZEUG**
TRANSPORT DEVICE FOR USE WHEN MOUNTING INTERIOR COMPONENT MODULES IN AN AIRCRAFT
DISPOSITIF DE TRANSPORT À UTILISER LORS DU MONTAGE DE MODULES D'ÉLÉMENTS INTÉRIEURS DANS UN AÉRONEF

(30) Priorität: 29.05.2009 DE 102009023393; 29.05.2009 US 182301 P
(43) Veröffentlichungstag der Anmeldung: 04.04.2012
(73) Patentinhaber: Airbus Operations GmbH, 21129 Hamburg (DE)
(72) Erfinder: UMLAUFT, Sebastian, 22767 Hamburg (DE); HUMFELDT, Dirk, 22607 Hamburg (DE); HALFMANN, Niklas, 20357 Hamburg (DE); KRAUSE, Dieter, 21244 Buchholz (DE)
(74) Vertreter: Schicker, Silvia
(86) Internationale Anmeldenummer: PCT/EP2010/002640
(87) Internationale Veröffentlichungsnummer: WO 2010/136102

(56) Entgegenhaltungen:
- EP-A2- 1 905 690
- WO-A1-02/48017
- WO-A1-2010/048495
- DE-U1-202004 015 422
- FR-A1- 2 774 609
- US-A- 5 549 287

## Beschreibung

Die Erfindung betrifft eine Transportvorrichtung zur Verwendung bei der Montage von Interieurkomponentenmodulen in einem Flugzeug.

Bei der Montage von Interieurkomponenten in einem Flugzeug ist es derzeit üblich, Bauteile, wie z.B. Dadopaneele, Seitenverkleidungen, Deckenverkleidungen, Lichtbänder, Gepäckfächer und dergleichen einzeln mit der Flugzeugstruktur zu verbinden. Da jedes Bauteil separat positioniert und an der Flugzeugstruktur befestigt werden muss, ist die Montage dieser Bauteile sehr zeitaufwendig. In ähnlicher Weise werden derzeit auch beispielsweise als luftführende Leitungen einer Flugzeugklimaanlage oder der Wasserversorgung in einer Flugzeugkabine dienende Rohrleitungen sowie elektrische Leitungen in zeitaufwändiger Weise einzeln an der Flugzeugstruktur befestigt. Nach der Montage muss im Rahmen einer Endkontrolle die ordnungsgemäße Funktion aller Leitungen überprüft werden. Insbesondere müssen alle Rohrleitungen einer Dichtigkeitsprüfung unterzogen werden, während bei den elektrischen Leitungen eine Überprüfung aller Schnittstellen erforderlich ist. Diese Tests sind ebenfalls verhältnismäßig aufwändig, da die zu prüfenden Leitungen und Schnittstellen im montierten Zustand der Leitungen häufig nur schwer zugänglich sind.

Aus diesem Grund gibt es Bestrebungen, zur Montage in einem Flugzeug, beispielsweise in einer Flugzeugkabine, vorgesehene Interieurkomponenten so umfassend wie möglich außerhalb des Flugzeugs vorzumontieren und zu testen. Insbesondere sollen Großmodule, die mehrere Überkopfgepäckfächer, mehrere Seitenverkleidungspaneele sowie weitere Interieurkomponenten, wie z.B. elektrische Leitungen, luftführende Leitungen einer Flugzeugklimaanlage oder der Wasserversorgung in der Flugzeugkabine dienende Rohrleitungen, Personal Service Units und Personal Service Channels umfassen können, ggf. mit Hilfe einer entsprechenden, beispielsweise in Form eines Montagegestells ausgebildeten Montagevorrichtung außerhalb des Flugzeugs vormontiert und getestet werden. Anschließend sollen die Großmodule in eine Endmontageposition in einem Flugzeugrumpfelement transportiert werden.

Die Erfindung ist auf die Aufgabe gerichtet, eine Transportvorrichtung bereitzustellen, die einen einfachen Transport von außerhalb eines Flugzeugs vormontierten Flugzeuginterieurkomponentenmodulen in eine Endmontageposition in einem Flugzeugrumpfelement sowie eine komfortable Endmontage der Interieurkomponentenmodule in dem Flugzeugrumpfelement ermöglicht.

Zur Lösung dieser Aufgabe umfasst eine erfindungsgemäße Transportvorrichtung, die zur Verwendung bei der Montage von Interieurkomponentenmodulen in einem Flugzeug vorgesehen ist, ein Fahrgestell sowie eine Interieurkomponentenmodulträgereinheit, die sich auf dem Fahrgestell abstützt. Die Interieurkomponentenmodulträgereinheit ist dazu eingerichtet ist, mit einem außerhalb des Flugzeugs vormontierten Interieurkomponentenmodul verbunden zu werden. Beispielsweise kann die Interieurkomponentenmodulträgereinheit so gestaltet sein, dass sie mit einem Großmodul verbunden werden kann, das mehrere Überkopfgepäckfächer, mehrere Seitenverkleidungspaneele sowie weitere Interieurkomponenten, wie z.B. elektrische Leitungen, luftführende Leitungen einer Flugzeugklimaanlage oder der Wasserversorgung in der Flugzeugkabine dienende Rohrleitungen, Personal Service Units und Personal Service Channels umfasst.

Im mit der Interieurkomponentenmodulträgereinheit verbundenen Zustand kann das Interieurkomponentenmodul mit Hilfe der erfindungsgemäßen Transportvorrichtung in eine Endmontageposition in einem Flugzeugrumpfelement transportiert werden. Das Flugzeugrumpfelement kann beispielsweise eine an mindestens einer Stirnseite offene Rumpfschale sein. Alternativ dazu kann das Großmodul jedoch auch in einen nahezu vollständig oder vollständig aufgebauten Flugzeugrumpf eingebracht werden. Wesentlich ist lediglich, dass das Flugzeugrumpfelement einen Zugang aufweist, der das Einbringen des Großmoduls in seine Endmontageposition in dem Flugzeugrumpfelement ermöglicht.

Zumindest ein Teil der Interieurkomponentenmodulträgereinheit ist derart relativ zu dem Fahrgestell bewegbar ist, dass ein mit der Interieurkomponentenmodulträgereinheit verbundenes Interieurkomponentenmodul relativ zu dem Fahrgestell horizontai sowie vertikal bewegbar ist. Mit anderen Worten, mindestens eine Komponente der Interieurkomponentenmodulträgereinheit ist relativ zu dem Fahrgestell horizontal bewegbar und mindestens eine Komponente der Interieurkomponentenmodulträgereinheit ist relativ zu dem Fahrgestell vertikal bewegbar, um eine horizontale sowie eine vertikale Bewegbarkeit des mit der Interieurkomponentenmodulträgereinheit verbundenen Interieurkomponentenmoduls relativ zu dem Fahrgestell zu gewährleisten. Bei der erfindungsgemäßen Transportvorrichtung kann die gleiche Komponente der Interieurkomponentenmodulträgereinheit oder die gesamte Interieurkomponentenmodulträgereinheit relativ zu dem Fahrgestell horizontal sowie vertikal bewegbar ausgeführt sein. Alternativ dazu kann aber auch eine Komponente der Interieurkomponentenmodulträgereinheit relativ zu dem Fahrgestell horizontal bewegbar, und eine andere Komponente der Interieurkomponentenmodulträgereinheit relativ zu dem Fahrgestell vertikal bewegbar sein.

Ferner kann grundsätzlich mindestens eine Komponente der Interieurkomponentenmodulträgereinheit horizontal nur in einer Richtung, d.h. entweder nur in einer Richtung parallel zu einer Längsachse der Transportvorrichtung (x-Richtung) oder nur in einer Richtung senkrecht zur Längsachse der Transportvorrichtung (y-Richtung) relativ zu dem Fahrgestell bewegbar sein. Ein mit der Interieurkomponentenmodulträgereinheit verbundenes Interieurkomponentenmodul ist dann horizontal auch nur in einer Richtung relativ zu dem Fahrgestell bewegbar. Alternativ dazu kann mindestens eine Komponente der Interieurkomponentenmodulträgereinheit und somit ein mit der Interieurkomponentenmodulträgereinheit verbundenes Interieurkomponentenmodul horizontal jedoch auch sowohl in x-Richtung als auch in y-Richtung bewegbar sein. Wenn die mindestens eine Komponente der Interieurkomponentenmodulträgereinheit horizontal in lediglich einer Richtung bewegbar ist, ist sie vorzugsweise in y-Richtung bewegbar, um eine Positionierung eines mit der Interieurkomponentenmodulträgereinheit verbundenen Interieurkomponentenmoduls relativ zu einer Seitenwand des Flugzeugrumpfelements, d.h. das Heranbewegen des Interieurkomponentenmoduls an die Seitenwand in einer Richtung senkrecht zu der Seitenwand oder das Wegbewegen des Interieurkomponentenmoduls von der Seitenwand in einer Richtung senkrecht zu der Seitenwand zu ermöglichen.

Mit Hilfe der erfindungsgemäßen Transportvorrichtung kann das in dem Flugzeugrumpfelement zu montierende Interieurkomponentenmodul zunächst in eine gewünschte Position in dem Flugzeugrumpfelement gefahren werden. Anschließend kann die horizontale sowie die vertikale Position des mit der Interieurkomponentenmodulträgereinheit verbundenen Interieurkomponentenmoduls relativ zu dem Flugzeugrumpfelement durch eine entsprechende Verschiebung der mindestens einen Komponente der Interieurkomponentenmodulträgereinheit relativ zu dem Fahrgestell der Transportvorrichtung feinreguliert werden.

Die erfindungsgemäße Transportvorrichtung hat den Vorteil, dass sie einen einfachen und komfortablen Transport von außerhalb des Flugzeugs vormontierten Interieurkomponentenmodulen in eine Endmontageposition in einem Flugzeugrumpfelement ermöglicht. Ferner wird die Endmontage der Interieurkomponentenmodule in dem Flugzeugrumpfelement durch die erfindungsgemäße Transportvorrichtung signifikant erleichtert, da die Feinregulierung der Position der Interieurkomponentenmodule in dem Flugzeugrumpfelement nicht nur eine ordnungsgemäße Positionierung der Interieurkomponentenmodule relativ zu dem Flugzeugrumpfelement erlaubt, sondern auch zum Ausgleich von Maßtoleranzen der Interieurkomponentenmodule genutzt werden kann. Durch den Einsatz der erfindungsgemäßen Transportvorrichtung kann somit der Prozess zur Montage von Interieurkomponenten in einem Flugzeug insgesamt effizienter gestaltet werden.

Die Interieurkomponentenmodulträgereinheit der erfindungsgemäßen Transportvorrichtung ist vorzugsweise zweiteilig ausgeführt. Beispielsweise kann die Interieurkomponentenmodulträgereinheit eine mit dem Fahrgestell verbundene L-Trägereinheit sowie eine mit der L-Trägereinheit verbundene C-Trägereinheit umfassen. Die L-Trägereinheit wird dann vorzugsweise unmittelbar von dem Fahrgestell getragen, während die C-Trägereinheit über die L-Trägereinheit auf dem Fahrgestell gelagert ist. Die Abmessungen der Interieurkomponentenmodulträgereinheit und somit der L-Trägereinheit sowie der C-Trägereinheit in Richtung einer Längsachse der erfindungsgemäßen Transportvorrichtung sind vorzugsweise an die Abmessungen eines mittels der erfindungsgemäßen Transportvorrichtung zu transportierenden Interieurkomponentenmoduls angepasst. Zur Minimierung des Gewichts der erfindungsgemäßen Transportvorrichtung ist die Interieurkomponentenmodulträgereinheit, ebenso wie das Fahrgestell vorzugsweise aus einzelnen Streben aufgebaut.

Zur Realisierung der horizontalen Bewegbarkeit zumindest eines Teils der Interieurkomponentenmodulträgereinheit relativ zu dem Fahrgestell kann die L-Trägereinheit der Interieurkomponentenmodulträgereinheit relativ zu dem Fahrgestell horizontal bewegbar ausgeführt sein. Beispielsweise kann die erfindungsgemäße Transportvorrichtung eine Gleiteinheit umfassen, die eine horizontale Bewegung der L-Trägereinheit der Interieurkomponentenmodulträgereinheit und damit auch der mit der L-Trägereinheit verbundenen C-Trägereinheit der Interieurkomponentenmodulträgereinheit relativ zu dem Fahrgestell ermöglicht. Wenn ein Interieurkomponentenmodul mit der Interieurkomponentenmodulträgereinheit der erfindungsgemäßen Transportvorrichtung verbunden ist, kann somit das Interieurkomponentenmodul auf einfache Weise durch eine horizontale Bewegung der L-Trägereinheit der Interieurkomponentenmodulträgereinheit relativ zu dem Fahrgestell horizontal relativ zu dem Fahrgestell bewegt werden. Dadurch kann auf komfortable Art und Weise die horizontale Endmontageposition des Interieurkomponentenmoduls feinreguliert werden. Beispielsweise kann das Interieurkomponentenmodul durch eine Bewegung der L-Trägereinheit der Interieurkomponentenmodulträgereinheit relativ zu dem Fahrgestell in y-Richtung an eine Seitenwand des Flugzeugrumpfelements herangefahren oder von der Seitenwand des Flugzeugrumpfelements weggefahren werden.

Zur Realisierung der vertikalen Bewegbarkeit zumindest eines Teils der Interieurkomponentenmodulträgereinheit relativ zu dem Fahrgestell ist dagegen vorzugsweise die C-Trägereinheit der Interieurkomponentenmodulträgereinheit relativ zu der L-Trägereinheit der Interieurkomponentenmodulträgereinheit vertikal bewegbar. Hierzu kann zwischen der L-Trägereinheit und der C-Trägereinheit der Interieurkomponentenmodulträgereinheit eine entsprechende Hubvorrichtung vorgesehen sein. Wenn ein Interieurkomponentenmodul an der Interieurkomponentenmodulträgereinheit, insbesondere der C-Trägereinheit der Interieurkomponentenmodulträgereinheit befestigt ist, kann durch eine vertikale Bewegung der C-Trägereinheit relativ zu der L-Trägereinheit auf komfortable Art und Weise auch eine vertikale Bewegung des Interieurkomponentenmoduls relativ zu dem Fahrgestell der erfindungsgemäßen Transportvorrichtung bewirkt werden. Dadurch kann das Interieurkomponentenmodul beispielsweise bei seiner Endmontage in dem Flugzeugrumpfelement in eine Höhe gefahren werden, in der das Interieurkomponentenmodul auf einfache Art und Weise mit der Struktur des Flugzeugrumpfelements verbunden werden kann.

Vorzugsweise ist an der Interieurkomponentenmodulträgereinheit der erfindungsgemäßen Transportvorrichtung eine Aufhängevorrichtung zur hängenden Befestigung eines Interieurkomponentenmoduls an der Transportvorrichtung vorgesehen. Die Aufhängevorrichtung kann beispielsweise in Form eines Halters ausgebildet sein, der zum Zusammenwirken mit einem an dem Interieurkomponentenmodul angebrachten Halter vorgesehen ist. Vorzugsweise sind die Aufhängevorrichtung und der an dem Interieurkomponentenmodul angebrachte Halter so gestaltet, dass der an dem Interieurkomponentenmodul angebrachte Halter und damit das Interieurkomponentenmodul an der Struktur des Flugzeugrumpfelements befestigt werden kann, bevor der an dem Interieurkomponentenmodul angebrachte Halter von der Aufhängevorrichtung der Transportvorrichtung entkoppelt wird.

Alternativ oder zusätzlich dazu kann an der Interieurkomponentenmodulträgereinheit der erfindungsgemäßen Transportvorrichtung auch eine Stützvorrichtung zur Abstützung eines Interieurkomponentenmoduls auf der Transportvorrichtung vorgesehen sein. Eine derartige Ausgestaltung der erfindungsgemäßen Transportvorrichtung ist insbesondere dann vorteilhaft, wenn mit Hilfe der Transportvorrichtung Interieurkomponentenmodule transportiert werden sollen, die ein Überkopfgepäckfach oder mehrer Überkopfgepäckfächer sowie ein Seitenverkleidungspaneel oder mehrere Seitenverkleidungspaneele umfassen. Vorzugsweise ist die Stützvorrichtung in einer derartigen Position an der Interieurkomponentenmodulträgereinheit angebracht, dass sie ein Interieurkomponentenmodul beim Transport auf der Transportvorrichtung in einem Bereich des Interieurkomponentenmoduls abstützt, der im in dem Flugzeugrumpfelement endmontierten Zustand des Interieurkomponentenmoduls nicht Teil der sichtbaren Oberfläche des Interieurkomponentenmoduls ist. Dadurch wird verhindert, dass der optische Eindruck des Interieurkomponentenmoduls beeinträchtigt wird.

Wenn Interieurkomponentenmodulträgereinheit sowohl eine Aufhängevorrichtung als auch eine Stützvorrichtung umfasst, kann die Aufhängevorrichtung in vorteilhafter Weise dazu verwendet werden, das Überkopfgepäckfach und damit das gesamte Interieurkomponentenmodul hängend an der Interieurkomponentenmodulträgereinheit der erfindungsgemäßen Transportvorrichtung zu befestigen. Die Stützvorrichtung kann dazu verwendet werden, das Überkopfgepäckfach beispielsweise in einem im endmontierten Zustand des Überkopfgepäckfach nicht sichtbaren Bereich einer Grundplatte abzustützen und damit das gesamte Interieurkomponentenmodul in seiner Position auf der Transportvorrichtung zu stabilisieren. Mit Hilfe einer Aufhängevorrichtung und/oder einer Stützvorrichtung kann das Interieurkomponentenmodul in einer Position auf der Transportvorrichtung angeordnet werden, die im Wesentlichen der Position entspricht, die das Interieurkomponentenmodul in seinem in dem Flugzeugrumpfelement endmontierten Zustand einnimmt. Dadurch kann auf eine aufwendige Umpositionierung des Interieurkomponentenmoduls nach dem Transport auf der Transportvorrichtung für seine Endmontage in dem Flugzeugrumpfelement verzichtet werden.

Die Aufhängevorrichtung zur hängenden Befestigung eines mittels der erfindungsgemäßen Transportvorrichtung zu transportierenden Interieurkomponentenmoduls ist vorzugsweise an der C-Trägereinheit der Interieurkomponentenmodulträgereinheit angebracht. Beispielweise kann die Aufhängevorrichtung an einer von dem Fahrgestell der Transportvorrichtung abgewandten oberen Horizontaleinheit der C-Trägereinheit der Interieurkomponentenmodulträgereinheit angebracht sein. Vorzugsweise ist die Aufhängevorrichtung an einer Strebe der C-Trägereinheit befestigt, die sich parallel zur Längsachse der Transportvorrichtung erstreckt. In Abhängigkeit der Abmessungen des Interieurkomponentenmoduls in Richtung der Längsachse der Transportvorrichtung kann die Aufhängevorrichtung mehrteilig ausgeführt sein, d.h. mehrere entlang der Längsachse der Transportvorrichtung verteilt angeordnete Einzelaufhängungen umfassen.

Die Stützvorrichtung zur Abstützung eines zum Transport auf der erfindungsgemäßen Transportvorrichtung vorgesehenen Interieurkomponentenmoduls ist vorzugsweise ebenfalls an der C-Trägereinheit der Interieurkomponentenmodulträgereinheit angebracht. Beispielsweise kann die Stützvorrichtung an einer dem Fahrgestell der Transportvorrichtung zugewandten unteren Horizontaleinheit der C-Trägereinheit angebracht sein. Beispielsweise kann sich die Stützvorrichtung in einer von dem Fahrgestell abgewandten Richtung von einer Strebe der C-Trägereinheit erstrecken, die im Wesentlichen senkrecht zur Längsachse der Transportvorrichtung ausgerichtet ist. Falls gewünscht oder erforderlich kann die Stützvorrichtung auch mehrteilig ausgeführt sein und mehrere Einzelabstützungen umfassen. Die Einzelabstützungen können sich dann von einer Strebe oder mehreren Streben der Horizontaleinheit der C-Trägereinheit erstrecken, die im Wesentlichen parallel zur Längsachse der Transportvorrichtung ausgerichtet ist/sind.

Grundsätzlich kann die Transportvorrichtung so ausgebildet sein, dass zumindest ein Teil der Interieurkomponentenmodulträgereinheit lediglich manuell relativ zu dem Fahrgestell horizontal und/oder vertikal bewegbar ist. Die Transportvorrichtung kann jedoch auch eine erste Kraftunterstützungsvorrichtung zur Unterstützung der horizontalen Bewegung zumindest eines Teils der Interieurkomponentenmodulträgereinheit relativ zu dem Fahrgestell umfassen. Zusätzlich oder alternativ dazu kann die Transportvorrichtung mit einer zweiten Kraftunterstützungsvorrichtung zur Unterstützung der vertikalen Bewegung zumindest eines Teils der Interieurkomponentenmodulträgereinheit relativ zu dem Fahrgestell versehen sein.

Die erste und/oder die zweite Kraftunterstützungsvorrichtung kann/können beispielsweise in Form einer Pneumatik- oder Hydraulikeinheit ausgeführt sein. Ferner ist auch der Einsatz einer einen Elektromotor umfassenden Kraftunterstützungsvorrichtung denkbar. Die erste und/oder die zweite Kraftunterstützungsvorrichtung kann/können so gestaltet sein, dass sie die horizontale bzw. vertikale Bewegung zumindest eines Teils der Interieurkomponentenmodulträgereinheit relativ zu dem Fahrgestell lediglich unterstützt/unterstützen. Alternativ dazu kann/können die erste und/oder die zweite Kraftunterstützungsvorrichtung jedoch auch so ausgelegt sein, dass sie eine horizontale bzw. vertikale Bewegung zumindest eines Teils der Interieurkomponentenmodulträgereinheit relativ zu dem Fahrgestell ohne zusätzliche manuelle Unterstützung ermöglichen. Mit Hilfe einer ersten und/oder einer zweiten Kraftunterstützungsvorrichtung kann zumindest ein Teil der Interieurkomponentenmodulträgereinheit und damit ein mit der Interieurkomponentenmodulträgereinheit verbundenes Interieurkomponentenmodul auf besonders komfortable Weise relativ zu dem Fahrgestell der erfindungsgemäßen Transportvorrichtung bewegt werden.

Das Fahrgestell der erfindungsgemäßen Transportvorrichtung weist vorzugsweise eine Mehrzahl von Vertikalstreben sowie eine Mehrzahl von Horizontalstreben auf. Diese Streben definieren vorzugsweise einen im Wesentlichen quaderförmigen Grundkörper des Fahrgestells. Durch den Aufbau des Fahrgestells mit Hilfe von Streben kann das Fahrgestell in vorteilhafter Weise besonders leichtgewichtig ausgeführt werden. Falls gewünscht oder erforderlich kann der Strebengrundkörper des Fahrgestells durch eine Mehrzahl von Diagonalstreben versteift sein. Dadurch wird der leichtgewichtige Aufbau des Fahrgestells beibehalten, das Fahrgestell erhält jedoch eine Stabilität, die auch den Transport von großen Interieurkomponentenmodulen über einen ggf. auch nicht völlig ebenen Untergrund ermöglicht.

Das Fahrgestell der erfindungsgemäßen Transportvorrichtung ist so gestaltet, dass die Transportvorrichtung in einer Flugzeugendmontageanlage, beispielsweise einer Endmontagehalle, frei oder geführt verfahrbar ist. Zu diesem Zweck ist an dem Fahrgestell vorzugsweise eine Mehrzahl von Rädern befestigt. Die an dem Fahrgestell angebrachten Räder können so gestaltet sein, dass das Fahrgestell durch entsprechende Führungsschienen geführt, in der Endmontageanlage verfahrbar ist. Ein besonders flexibler Einsatz der erfindungsgemäßen Transportvorrichtung ist jedoch dann möglich, wenn das Fahrgestell der Transportvorrichtung mit Rädern versehen ist, die eine freie Verfahrbarkeit der Transportvorrichtung in der Endmontageanlage ermöglichen. Um die Transportvorrichtung bei Bedarf in einer gewünschten Position zu arretieren, ist die Transportvorrichtung vorzugsweise mit einer Arretiervorrichtung versehen. Beispielsweise kann die Arretiervorrichtung mit den Rädern des Fahrgestells zusammenwirkende Bremsen umfassen. Um eine komfortable Bedienung der Arretiervorrichtung zu ermöglichen, weist die Arretiervorrichtung vorzugsweise mehrer Betätigungshebel auf, die an verschiedenen Positionen an dem Fahrgestell, beispielsweise an den beiden Stirnseiten des Fahrgestells angebracht sind.

Die erfindungsgemäße Transportvorrichtung ist vorzugsweise ferner mit einer Führungseinrichtung versehen, die dazu eingerichtet ist, bei der Positionierung eines auf der Transportvorrichtung angeordneten Interieurkomponentenmoduls in seiner Endmontageposition in dem Flugzeugrumpfelement mit einer in dem Flugzeugrumpfelement vorgesehenen komplementären Führungseinrichtung zusammenzuwirken. Beispielsweise kann an dem Fahrgestell und/oder an der Interieurkomponentenmodulträgereinheit der erfindungsgemäßen Transportvorrichtung ein entsprechender Vorsprung ausgebildet sein, der dazu eingerichtet ist, mit einer an dem Flugzeugrumpfelement vorgesehenen Führungsschiene zusammenzuwirken, um die Transportvorrichtung und damit ein auf der Transportvorrichtung angeordnetes Interieurkomponentenmodul in einer gewünschten Endmontageposition in dem Flugzeugrumpfelement zu positionieren.

Ferner kann die erfindungsgemäße Transportvorrichtung mindesten einen Sensor zur Erfassung der Position der Transportvorrichtung und/oder der Position eines an der Transportvorrichtung angebrachten Interieurkomponentenmoduls umfassen. Beispielsweise kann an der C-Trägereinheit der Interieurkomponentenmodulträgereinheit mindestens ein Sensor vorgesehen sein, der dazu eingerichtet ist, für die Position der Transportvorrichtung und/oder die Position eines an der Transportvorrichtung angebrachten Interieurkomponentenmoduls relativ zu einem Flugzeugrumpfelement charakteristische Signale auszugeben. Durch den Einsatz einer derartigen Messelektronik wird eine besonders genaue Positionierung eines zum Transport auf der erfindungsgemäßen Transportvorrichtung vorgesehenen Interieurkomponentenmoduls in seiner Endmontageposition in dem Flugzeugrumpfelement ermöglicht.

Weiterhin kann die erfindungsgemäße Transportvorrichtung eine Steuereinheit umfassen, die den Betrieb der ersten und/oder der zweiten Kraftunterstützungsvorrichtung in Abhängigkeit von Signalen des mindestens eines Sensors zur Erfassung der Position der Transportvorrichtung und/oder der Position eines an der Transportvorrichtung angebrachten Interieurkomponentenmoduls steuert. Insbesondere dann, wenn die erste und/oder die zweite Kraftunterstützungsvorrichtung so gestaltet ist/sind, dass eine Bewegung zumindest eines Teils der Interieurkomponentenmodulträgereinheit und damit eines an der Interieurkomponentenmodulträgereinheit angebrachtes Interieurkomponentenmoduls relativ zu dem Fahrgestell der erfindungsgemäßen Transportvorrichtung ohne zusätzliche manuelle Unterstützung möglich ist, erlaubt die Steuereinheit mehr oder weniger eine vollständig automatische Positionierung eines an der Transportvorrichtung angebrachten Interieurkomponentenmoduls in seiner Endmontageposition in dem Flugzeugrumpfelement.

Die erfindungsgemäße Transportvorrichtung kann ferner eine an dem Fahrgestell befestigte Trittvorrichtung umfassen. Die Trittvorrichtung kann dazu eingerichtet sein, von einem Bediener der Transportvorrichtung betreten zu werden, um dem Bediener einen oberen Bereich der Transportvorrichtung und/oder eines an der Transportvorrichtung angebrachten Interieurkomponentenmoduls zugänglich zu machen. Eine mit einer Trittvorrichtung versehene Transportvorrichtung ist besonders komfortabel bedienbar. Insbesondere bietet sich die Bereitstellung einer Trittvorrichtung an der erfindungsgemäßen Transportvorrichtung an, wenn zum Transport auf der Transportvorrichtung vorgesehene Interieurkomponentenmodule in Überkopfhöhe in dem Flugzeugrumpfelement befestigt werden müssen.

Ein bevorzugtes Ausführungsbeispiel einer erfindungsgemäßen Transportvorrichtung wird nun anhand der beigefügten, schematischen Zeichnungen näher erläutert, von denen
- Figur 1: eine dreidimensionale Darstellung einer Transportvorrichtung zur Verwendung bei der Montage von Interieurkomponentenmodulen in einem Flugzeug zeigt,
- Figur 2: die Transportvorrichtung gemäß Figur 1 mit einem daran angebrachten Interieurkomponentenmodul zeigt und
- Figur 3: eine Seitenansicht der Transportvorrichtung mit einem daran befestigten Interieurkomponentenmodul gemäß Figur 2 zeigt.

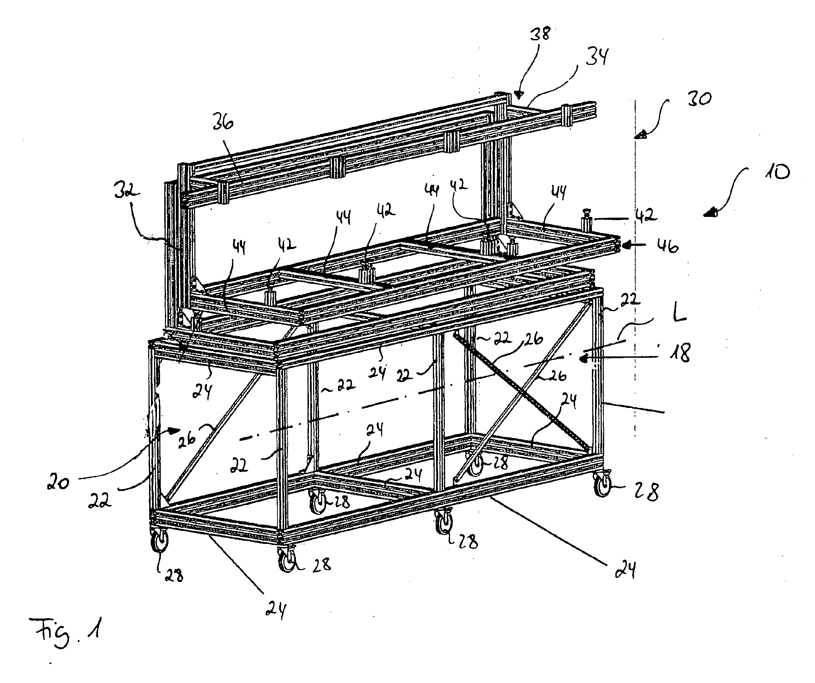

Eine in den Figuren 1 bis 3 veranschaulichte Transportvorrichtung 10 ist zur Verwendung bei der Montage von Interieurkomponentenmolen 12 in einem Flugzeug vorgesehen. In dem in den Figuren gezeigten Ausführungsbeispiel dient die Transportvorrichtung 10 zum Transport von außerhalb des Flugzeugs vormontierten Interieurkomponentenmodulen 12, die jeweils drei zueinander benachbarte Überkopfgepäckfächer 14 sowie drei jeweils mit den Überkopfgepäckfächern 14 verbundene Seitenverkleidungspaneele 16 umfassen. Ferner können die Interieurkomponentenmodule 12 weitere Interieurkomponenten, wie z. B. elektrische Leitungen, luftführende Leitungen einer Flugzeugklimaanlage oder der Wasserversorgung in der Flugzeugkabine dienende Rohrleitungen, Personal Service Units und Personal Service Channels umfassen. Die Transportvorrichtung 10 wird dazu genutzt, die vormontierten und auch bereits außerhalb des Flugzeugs so umfassend wie möglich getesteten Interieurkomponentenmodule 12 in eine Endmontageposition in einem Flugzeugrumpfelement zu transportieren. Das Flugzeugrumpfelement ist beispielsweise eine an mindestens einer Stirnseite offene Rumpfschale, die einen ungehinderten Transport der Interieurkomponentenmodule 12 in ihre Endmontageposition im Inneren des Flugzeugrumpfelements ermöglicht.

Die Transportvorrichtung 10 umfasst ein Fahrgestell 18 mit einem im Wesentlichen quaderförmigen Grundkörper 20, der durch eine Mehrzahl von Vertikalstreben 22 sowie eine Mehrzahl von Horizontalstreben 24 definiert wird. Zur Versteifung des Fahrgestells 18 ist ferner eine Mehrzahl von Diagonalstreben 26 vorgesehen. An dem Fahrgestell 18 ist eine Mehrzahl von Rädern 28 befestigt. Mit Hilfe der an dem Fahrgestell 18 befestigten Räder 28 kann die Transportvorrichtung 10 frei in einer Endmontageanlage, wie z.B. einer Endmontagehalle verfahren werden.

Um die Transportvorrichtung 10 in einer gewünschten Position, beispielsweise einer Endmontageposition eines auf der Transportvorrichtung 10 transportierten Interieurkomponentenmoduls 12 in dem Flugzeugrumpfelement arretieren zu können, weist die Transportvorrichtung 10 eine in den Figuren nicht veranschaulichte Arretiervorrichtung auf. Mit Hilfe der Arretiervorrichtung können die Räder 28 der Transportvorrichtung 10 blockiert werden, so dass eine weitere Bewegung der Transportvorrichtung 10 sicher unterbunden wird. Ferner ist die Transportvorrichtung 10 mit einer in den Figuren nicht veranschaulichten Führungseinrichtung versehen, die dazu eingerichtet ist, bei der Positionierung eines auf der Transportvorrichtung 10 aufgenommenen Interieurkomponentenmoduls 12 in seiner Endmontageposition in dem Flugzeugrumpfelement mit einer in dem Flugzeugrumpfelement vorgesehenen komplementären Führungseinrichtung zusammen zu wirken. Durch das Zusammenwirken der an der Transportvorrichtung vorgesehenen Führungseinrichtung mit der an dem Flugzeugrumpfelement vorgesehenen komplementären Führungseinrichtung wird die Positionierung des Interieurkomponentenmoduls 12 bei seiner Endmontage in dem Flugzeugrumpfelement beträchtlich vereinfacht.

Auf dem Fahrgestell 18 der Transportvorrichtung 10 stützt sich eine zweiteilig ausgebildete Interieurkomponentenmodulträgereinheit 30 ab. Die Interieurkomponentenmodulträgereinheit 30 umfasst eine unmittelbar mit dem Fahrgestell 18 verbundene L-Trägereinheit 32 sowie eine mit der L-Trägereinheit 32 verbundene C-Trägereinheit 34. Ähnlich wie das Fahrgestell 18 sind auch die L-Trägereinheit 32 sowie die C-Trägereinheit 34 der Interieurkomponentenmodulträgereinheit 30 aus einer Mehrzahl von Streben aufgebaut.

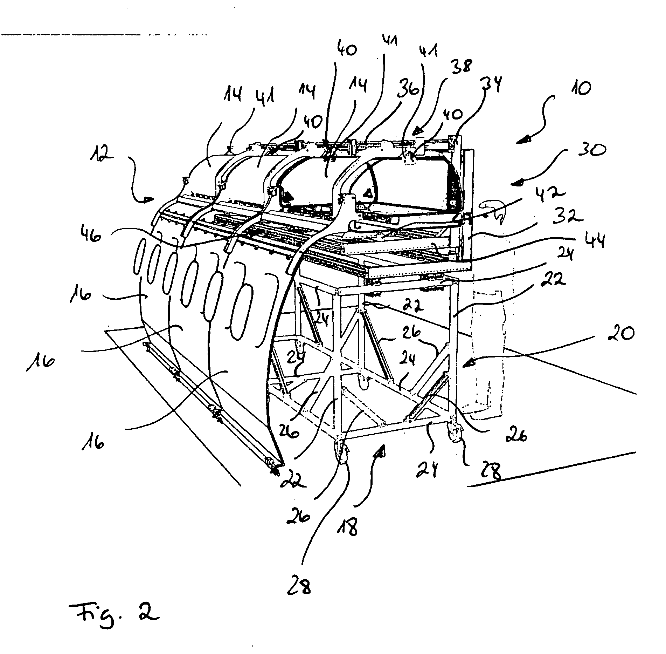

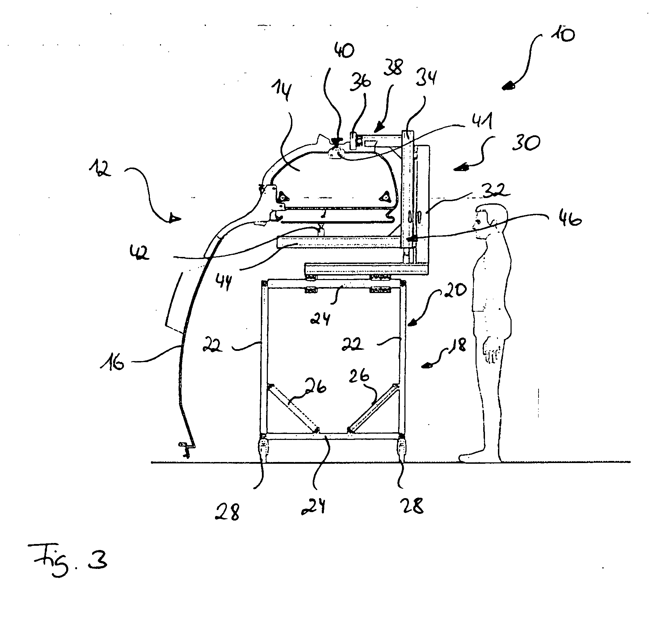

Wie am Besten in den Figuren 2 und 3 zu erkennen ist, ist an einer sich parallel zu einer Längsachse L der Transportvorrichtung 10 erstreckenden Strebe 36 einer von dem Fahrgestell 18 abgewandten Horizontaleinheit 38 der C-Trägereinheit 34 eine Aufhängevorrichtung 40 angebracht. Mit Hilfe der Aufhängevorrichtung 40 können die Überkopfgepäckfächer 14 des Interieurkomponentenmoduls 12 und somit das Interieurkomponentenmodul 12 insgesamt hängend an der Transportvorrichtung 10 befestigt werden. Die Aufhängevorrichtung 40 ist mehrteilig ausgebildet und umfasst eine Mehrzahl von Einzelaufhängungen. Jede Einzelaufhängung ist dazu vorgesehen, mit einem an dem Interieurkomponentenmodul 12 angebrachten Halter 41 zusammenzuwirken. Die Aufhängevorrichtung 40 und die an dem Interieurkomponentenmodul 12 angebrachten Halter 41 sind jeweils so gestaltet, dass der an dem Interieurkomponentenmodul 12 angebrachte Halter 41 und damit das Interieurkomponentenmodul 12 an der Struktur des Flugzeugrumpfelements befestigt werden kann, bevor der an dem Interieurkomponentenmodul 12 angebrachte Halter 41 von der Aufhängevorrichtung 40 der Transportvorrichtung entkoppelt wird.

Zur Stabilisierung des Interieurkomponentenmoduls 12 in seiner Transportposition auf der Transportvorrichtung 10 ist ferner eine Stützvorrichtung 42 vorgesehen, die mit einer Grundplatte der Überkopfgepäckfächer 14 zusammenwirkt. Die Stützvorrichtung 42 ist, ähnlich wie die Aufhängevorrichtung 40, mehrteilig ausgeführt und erstreckt sich von Streben 44 einer dem Fahrgestell 18 zugewandten Horizontaleinheit 46 der C-Trägereinheit 34 in eine Richtung parallel zur Längsache L der Transportvorrichtung 10 nach oben.

Durch das Zusammenwirken der Aufhängevorrichtung 40 und der Stützvorrichtung 42 kann das Interieurkomponentenmodul 12 in einer Position auf der Transportvorrichtung 10 aufgenommen werden, die im Wesentlichen der Position entspricht, die das Interieurkomponentenmodul 12 in seinem in dem Flugzeugrumpfelement endmontierten Zustand einnimmt. Dadurch kann auf eine aufwendige Umpositionierung des Interieurkomponentenmoduls 12 nach dem Transport auf der Transportvorrichtung 10 zur Endmontage in dem Flugzeugrumpfelement verzichtet werden.

Über eine Gleiteinheit ist die L-Trägereinheit 32 der Interieurkomponentenmodulträgereinheit 30 horizontal relativ zu dem Fahrgestell 18 bewegbar. In dem in den Figuren gezeigten Ausführungsbeispiel ist die L-Trägereinheit 32 der Interieurkomponentenmodulträgereinheit 30 lediglich in einer Richtung senkrecht zur Längsachse L der Transportvorrichtung 10 (y-Richtung) relativ zu dem Fahrgestell 18 bewegbar. Falls gewünscht, kann jedoch auch eine horizontale Bewegbarkeit der L-Trägereinheit 32 relativ zu dem Fahrgestell 18 sowohl in y-Richtung als auch in eine Richtung parallel zur Längsachse L der Transportvorrichtung 10 (x-Richtung) vorgesehen werden.

Darüber hinaus ist die C-Trägereinheit 34 der Interieurkomponentenmodulträgereinheit 30 relativ zu der L-Trägereinheit 32 der Interieurkomponentenmodulträgereinheit 30 vertikal bewegbar. Zur-Realisierung der horizontalen Bewegbarkeit der L-Trägereinheit 32 relativ zu dem Fahrgestell 18 und zur Realisierung der vertikalen Bewegbarkeit der C-Trägereinheit 34 relativ zu der L-Trägereinheit 32 ist die Transportvorrichtung 10 mit einer ersten sowie einer zweiten Kraftunterstützungsvorrichtung (nicht gezeigt) versehen. Die erste Kraftunterstützungsvorrichtung sorgt für die horizontale Bewegung der L-Trägereinheit 32 relativ zu dem Fahrgestell 18 und die zweite Kraftunterstützungsvorrichtung sorgt für die vertikale Bewegung der C-Trägereinheit 34 relativ zu der L-Trägereinheit 32. Durch die bewegbare Anordnung der C-Trägereinheit 34 sowie der L-Trägereinheit 32 der Interieurkomponentenmodulträgereinheit 30 kann die horizontale sowie die vertikale Position eines mit der Interieurkomponentenmodulträgereinheit 30 verbundenen Interieurkomponentenmoduls 12 bei der Endmontage in dem Flugzeugrumpfelement feinreguliert werden.

An der Strebe 36 der C-Trägereinheit 34 ist ferner eine Mehrzahl von in den Figuren nicht veranschaulichten Sensoren angebracht. Die Sensoren dienen der Erfassung der Position eines an der Transportvorrichtung 10 angebrachten Interieurkomponentenmoduls 12 relativ zu dem Flugzeugrumpfelement. Die von den Sensoren ausgegebenen Signale können einer beispielsweise in Form einer elektronischen Steuereinheit ausgeführten Steuereinheit zugeleitet werden. Die Steuereinheit kann den Betrieb der ersten und/oder der zweiten Kraftunterstützung dann in Abhängigkeit der Sensorsignale steuern, so dass das an der Transportvorrichtung 10 angebrachte Interieurkomponentenmodul 12 mehr oder weniger automatisch in seine Endmontageposition in dem Flugzeugrumpfelement gebracht werden kann.

Ferner kann das Fahrgestell 18 der Transportvorrichtung 10 mit einer in den Figuren ebenfalls nicht veranschaulichten Trittvorrichtung verbunden werden. Die Trittvorrichtung ist dazu eingerichtet, von einem Bediener der Transportvorrichtung 10 betreten zu werden. Dadurch wird dem Bediener ein oberer Bereich der Transportvorrichtung 10 sowie ein oberer Bereich eines an der Transportvorrichtung 10 angebrachten Interieurkomponentenmoduls 12 zugänglich gemacht. Dadurch kann der Bediener auf komfortable Art und Weise das Interieurkomponentenmodul 12 auch in einer Überkopfposition an der Struktur des Flugzeugrumpfelements befestigen.

## Patentansprüche

1. Transportvorrichtung (10) zur Verwendung bei der Montage von Interieurkomponentenmodulen (12) in einem Flugzeug, welche umfasst:
- ein Fahrgestell (18) und
- eine Interieurkomponentenmodulträgereinheit (30), die sich auf dem Fahrgestell (18) abstützt und dazu eingerichtet ist, mit einem außerhalb des Flugzeugs vormontierten Interieurkomponentenmodul (12) verbunden zu werden, um das Interieurkomponentenmodul (12) mit Hilfe der Transportvorrichtung (10) in eine Endmontageposition in einem Flugzeugrumpfelement zu transportieren, wobei zumindest ein Teil der Interieurkomponentenmodulträgereinheit (30) derart relativ zu dem Fahrgestell (18) bewegbar ist, dass ein mit der Interieurkomponentenmodulträgereinheit (30) verbundenes Interieurkomponentenmodul (12) relativ zu dem Fahrgestell (18) horizontal sowie vertikal bewegbar ist, wobei
die Transportvorrichtung (10) mit einer Führungseinrichtung versehen ist, die dazu eingerichtet ist, bei der Positionierung des Interieurkomponentenmoduls (12) in seiner Endmontageposition in dem Flugzeugrumpfelement mit einer in dem Flugzeugrumpfelement vorgesehenen komplementären Führungseinrichtung zusammenzuwirken.

2. Transportvorrichtung nach Anspruch 1,
**dadurch gekennzeichnet, dass** die Interieurkomponentenmodulträgereinheit (30) zweiteilig ausgeführt ist und eine mit dem Fahrgestell (18) verbundene L-Trägereinheit (32) sowie eine mit der L-Trägereinheit (32) verbundene C-Trägereinheit (34) umfasst.

3. Transportvorrichtung nach Anspruch 2,
**dadurch gekennzeichnet, dass** die L-Trägereinheit (32) der Interieurkomponentenmodulträgereinheit (30) relativ zu dem Fahrgestell (18) horizontal bewegbar ist.

4. Transportvorrichtung nach Anspruch2 oder 3 ,
**dadurch gekennzeichnet, dass** die C-Trägereinheit (34) der Interieurkomponentenmodulträgereinheit (30) relativ zu der L-Trägereinheit (32) der Interieurkomponentenmodulträgereinheit (30) vertikal bewegbar ist.

5. Transportvorrichtung nach einem der Ansprüche 1 bis 4,
**dadurch gekennzeichnet, dass** an der Interieurkomponentenmodulträgereinheit (30) eine Aufhängevorrichtung (40) zur hängenden Befestigung eines Interieurkomponentenmoduls (12) an der Transportvorrichtung (10) und/oder eine Stützvorrichtung (42) zur Abstützung eines Interieurkomponentenmoduls (12) auf der Transportvorrichtung (10) vorgesehen ist.

6. Transportvorrichtung nach Anspruch 5,
**dadurch gekennzeichnet, dass** die Aufhängevorrichtung (40) an einer von dem Fahrgestell (18) abgewandten Horizontaleinheit (38) der C-Trägereinheit (34) der Interieurkomponentenmodulträgereinheit (30) angebracht ist.

7. Transportvorrichtung nach Anspruch 5 oder 6,
**dadurch gekennzeichnet, dass** die Stützvorrichtung (42) an einer dem Fahrgestell (18) zugewandten Horizontaleinheit (46) der C-Trägereinheit (34) der Interieurkomponentenmodulträgereinheit (30) angebracht ist.

8. Transportvorrichtung nach einem der Ansprüche 1 bis 7,
**gekennzeichnet durch** eine erste Kraftunterstützungsvorrichtung zur Unterstützung der horizontalen Bewegung zumindest eines Teils der Interieurkomponentenmodulträgereinheit (30) relativ zu dem Fahrgestell (18).

9. Transportvorrichtung nach einem der Ansprüche 1 bis 8,
**gekennzeichnet durch** eine zweite Kraftunterstützungsvorrichtung zur Unterstützung der vertikalen Bewegung zumindest eines Teils der Interieurkomponentenmodulträgereinheit (30) relativ zu dem Fahrgestell (18).

10. Transportvorrichtung nach einem der Ansprüche 1 bis 9,
**dadurch gekennzeichnet, dass** das Fahrgestell (18) eine Mehrzahl von Vertikalstreben (22) sowie eine Mehrzahl von Horizontalstreben (24) aufweist, die einen im Wesentlichen quaderförmigen Grundkörper (20) des Fahrgestells (18) definieren, der durch eine Mehrzahl von Diagonalstreben (26) versteift wird.

11. Transportvorrichtung nach einem der Ansprüche 1 bis 10,
**dadurch gekennzeichnet, dass** an dem Fahrgestell (18) eine Mehrzahl von Rädern (28) befestigt ist, und dass die Transportvorrichtung (10) mit einer Arretiervorrichtung versehen ist, um die Transportvorrichtung (10) bei Bedarf in einer gewünschten Position zu arretieren.

12. Transportvorrichtung nach einem der Ansprüche 1 bis 11,
**dadurch gekennzeichnet, dass** an der Transportvorrichtung (10) mindestens ein Sensor zur Erfassung der Position der Transportvorrichtung (10) und/oder der Position eines an der Transportvorrichtung (10) angebrachten Interieurkomponentenmoduls (12) vorgesehen ist.

13. Transportvorrichtung nach Anspruch 12,
**gekennzeichnet durch** eine Steuereinheit, die den Betrieb der ersten und/oder der zweiten Kraftunterstützungsvorrichtung in Abhängigkeit von Signalen des mindestens einen Sensors zur Erfassung der Position der Transportvorrichtung (10) und/oder der Position eines an der Transportvorrichtung (10) angebrachten Interieurkomponentenmoduls (12) steuert.

14. Transportvorrichtung nach einem der Ansprüche 1 bis 13,
**gekennzeichnet durch** eine an dem Fahrgestell (18) befestigte Trittvorrichtung, die dazu eingerichtet ist, von einem Bediener der Transportvorrichtung (10) betreten zu werden, um dem Bediener einen oberen Bereich der Transportvorrichtung (10) und/oder eines an der Transportvorrichtung (10) angebrachten Interieurkomponentenmoduls (12) zugänglich zu machen.

## Claims

1. Transport device (10) for use when mounting interior component modules (12) in an aircraft, comprising:
- an undercarriage (18) and
- an interior component module carrier unit (30), which is supported on the undercarriage (18) and adapted to be connected to an interior component module (12), which has been preassembled outside of the aircraft, in order to transport the interior component module (12) with the aid of the transport device (10) into a final assembly position in an aircraft fuselage element, wherein at least a part of the interior component module carrier unit (30) is movable in such a way relative to the undercarriage (18) that an interior component module (12) connected to the interior component module carrier unit (30) is movable horizontally and vertically relative to the undercarriage (18), wherein
the transport device (10) is provided with a guide device, which during the positioning of the interior component module (12) in its final assembly position in the aircraft fuselage element is adapted to interact with a complementary guide device that is provided in the aircraft fuselage element.

2. Transport device according to claim 1,
**characterized in that** the interior component module carrier unit (30) is of a two-piece construction and comprises an L-shaped carrier unit (32), which is connected to the undercarriage (18), and a C-shaped carrier unit (34), which is connected to the L-shaped carrier unit (32).

3. Transport device according to claim 2,
**characterized in that** the L-shaped carrier unit (32) of the interior component module carrier unit (30) is movable horizontally relative to the undercarriage (18).

4. Transport device according to claim 2 or 3,
**characterized in that** the C-shaped carrier unit (34) of the interior component module carrier unit (30) is movable vertically relative to the L-shaped carrier unit (32) of the interior component module carrier unit (30).

5. Transport device according to one of claims 1 to 4,
**characterized in that** provided on the interior component module carrier unit (30) is a suspension device (40) for fastening an interior component module (12) in a suspended manner on the transport device (10) and/or a support device (42) for supporting an interior component module (12) on the transport device (10).

6. Transport device according to claim 5,
**characterized in that** the suspension device (40) is mounted on a horizontal unit (38) of the C-shaped carrier unit (34) of the interior component module carrier unit (30) that is remote from the undercarriage (18).

7. Transport device according to claim 5 or 6,
**characterized in that** the support device (42) is mounted on a horizontal unit (46) of the C-shaped carrier unit (34) of the interior component module carrier unit (30) that faces the undercarriage (18).

8. Transport device according to one of claims 1 to 7,
**characterized by** a first power-assist device for assisting the horizontal movement of at least a part of the interior component module carrier unit (30) relative to the undercarriage (18).

9. Transport device according to one of claims 1 to 8,
**characterized by** a second power-assist device for assisting the vertical movement of at least a part of the interior component module carrier unit (30) relative to the undercarriage (18).

10. Transport device according to one of claims 1 to 9,
**characterized in that** the undercarriage (18) comprises a plurality of vertical struts (22) and a plurality of horizontal struts (24), which define a substantially cuboidal basic body (20) of the undercarriage (18) that is strengthened by means of a plurality of diagonal struts (26).

11. Transport device according to one of claims 1 to 10,
**characterized in that** a plurality of wheels (28) are fastened to the undercarriage (18), and that the transport device (10) is provided with a locking device for locking the transport device, if need be, in a desired position.

12. Transport device according to one of claims 1 to 11,
**characterized in that** on the transport device (10) at least one sensor is provided for detecting the position of the transport device (10) and/or the position of an interior component module (12) that is mounted on the transport device (10).

13. Transport device according to claim 12,
**characterized by** a control unit that controls the operation of the first and/or the second power-assist device in dependence upon signals of the at least one sensor for detecting the position of the transport device (10) and/or the position of an interior component module (12) that is mounted on the transport device (10).

14. Transport device according to one of claims 1 to 13,
**characterized by** a step device that is fastened to the undercarriage (18) and is adapted to be stepped on by an operator of the transport device (10) in order to make an upper region of the transport device (10) and/or of an interior component module (12) mounted on the transport device (10) accessible to the operator.

## Revendications

1. Dispositif de transport (10) à utiliser lors du montage de modules d'éléments intérieurs (12) dans un aéronef, lequel comprend :
- un châssis (18) et
- une unité de support de module d'éléments intérieurs (30) qui prend appui sur le châssis (18) et est conçue pour être reliée à un module d'éléments intérieurs (12) pré-monté à l'extérieur de l'aéronef, afin de permettre le transport du module d'éléments intérieurs (12) au moyen du dispositif de transport (10) pour l'amener dans une position de montage finale dans un élément de fuselage d'aéronef, au moins une partie de l'unité de support de module d'éléments intérieurs (30) pouvant se déplacer par rapport au châssis (18) de telle sorte qu'un module d'éléments intérieurs (12) relié à l'unité de support de module d'éléments intérieurs (30) peut se déplacer horizontalement et verticalement par rapport au châssis (18), le dispositif de transport (10) étant muni d'un dispositif de guidage qui est conçu pour interagir avec un dispositif de guidage complémentaire prévu dans l'élément de fuselage d'aéronef, lorsque le module d'éléments intérieurs (12) est amené dans une position de montage finale dans un élément de fuselage d'aéronef.

2. Dispositif de transport selon la revendication 1,
**caractérisé en ce que** l'unité de support de module d'éléments intérieurs (30) est réalisée en deux parties et comprend une unité de support en L (32) reliée au châssis (18) ainsi qu'une unité de support en C (34) reliée à l'unité de support en L (32).

3. Dispositif de transport selon la revendication 2,
**caractérisé en ce que** l'unité de support en L (32) de l'unité de support de module d'éléments intérieurs (30) peut se déplacer horizontalement par rapport au châssis (18).

4. Dispositif de transport selon la revendication 2 ou 3,
**caractérisé en ce que** l'unité de support en C (34) de l'unité de support de module d'éléments intérieurs (30) peut se déplacer verticalement par rapport à l'unité de support en L (32) de l'unité de support de module d'éléments intérieurs (30).

5. Dispositif de transport selon l'une des revendications 1 à 4,
**caractérisé en ce qu'**il est prévu un dispositif de suspension (40) sur l'unité de support de module d'éléments intérieurs (30) pour la fixation en suspension d'un module d'éléments intérieurs (12) sur le dispositif de transport (10) et/ou un dispositif d'appui (42) pour le support d'un module d'éléments intérieurs (12) sur le dispositif de transport (10).

6. Dispositif de transport selon la revendication 5,
**caractérisé en ce que** le dispositif de suspension (40) est monté sur une unité horizontale (38) de l'unité de support en C (34) de l'unité de support de module d'éléments intérieurs (30), laquelle unité horizontale (38) est éloignée au châssis (18).

7. Dispositif de transport selon la revendication 5 ou 6,
**caractérisé en ce que** le dispositif d'appui (42) est monté sur une unité horizontale (46) de l'unité de support en C (34) de l'unité de support de module d'éléments intérieurs (30), laquelle unité horizontale (46) est proche du châssis (18).

8. Dispositif de transport selon l'une des revendications 1 à 7,
**caractérisé par** un premier dispositif d'assistance de force pour faciliter le déplacement horizontal d'au moins une partie de l'unité de support de module d'éléments intérieurs (30) par rapport au châssis (18).

9. Dispositif de transport selon l'une des revendications 1 à 8,
**caractérisé par** un deuxième dispositif d'assistance de force pour faciliter le déplacement vertical d'au moins une partie de l'unité de support de module d'éléments intérieurs (30) par rapport au châssis (18).

10. Dispositif de transport selon l'une des revendications 1 à 9,
**caractérisé en ce que** le châssis (18) présente une pluralité d'entretoises verticales (22) et une pluralité d'entretoises horizontales (24) qui définissent un corps de base (20) du châssis (18), lequel corps a une forme sensiblement parallélépipédique et est renforcé par une pluralité d'entretoises diagonales (26).

11. Dispositif de transport selon l'une des revendications 1 à 10,
**caractérisé en ce qu'**une pluralité de roues (28) est fixée sur le châssis (18) et **en ce que** le dispositif de transport (10) est muni d'un dispositif d'arrêt pour bloquer le cas échéant le dispositif de transport (10) dans une position souhaitée.

12. Dispositif de transport selon l'une des revendications 1 à 11,
**caractérisé en ce qu'**il est prévu sur le dispositif de transport (10) au moins un capteur pour détecter la position du dispositif de transport (10) et/ou la position d'un module d'éléments intérieurs (12) monté sur le dispositif de transport (10).

13. Dispositif de transport selon la revendication 12,
**caractérisé par** une unité de commande qui commande le fonctionnement du premier et/ou du deuxième dispositif d'assistance de force en fonction des signaux émis par ledit capteur de détection de la position du dispositif de transport (10) et/ou de la position d'un module d'éléments intérieurs (12) monté sur le dispositif de transport (10).

14. Dispositif de transport selon l'une des revendications 1 à 13,
**caractérisé par** un dispositif de marchepied fixé au châssis (18) et conçu pour permettre à un opérateur du dispositif de transport (10) d'accéder à une partie supérieure du dispositif de transport (10) et/ou à une partie supérieure d'un module d'éléments intérieurs (12) monté sur le dispositif de transport (10).
